# EUROPEAN PATENT APPLICATION

(11) **EP 2 375 209 A2**
(43) Date of publication of application: **12.10.2011**
(21) Application number: 11159597.1
(22) Date of filing: 24.03.2011
(51) Int. Cl.: F28D 1/053, F28F 9/02

(54) **Improved heat exchanger having an inlet distributor and outlet collector**

(30) Priority: 01.04.2010 US 320014 P; 21.03.2011 US 52554
(71) Applicant: Delphi Technologies, Inc., Troy, MI 48007 (US)
(72) Inventor: Wintersteen, Douglas C., Burt, NY 14028 (US); Samuelson, David E., Wheatfield, NY 14304 (US); Johnson, Russel S., Tonawanda, NY 14150 (US); Pautler, Donald R., Lockport, NY 14094 (US); Xia, Yanping, North Tonawanda, NY 14120 (US)
(74) Representative: Allain, Michel Jean Camille

(57) **Abstract**

An improved heat exchanger assembly having an inlet header in hydraulic communication with an outlet header via a plurality of multi-channel flat refrigerant tubes, in which the multi-channel flat refrigerant tubes are substantially perpendicular to the headers. Interconnecting the refrigerant tubes are corrugated fins. The plurality of refrigerant tubes together with the fins defines the core of the heat exchanger assembly. The heat exchanger assembly also includes a distributor tube disposed in the inlet header cavity and a collector tube disposed in the outlet header cavity. The distributor tube and collector tube have cooperating features for archiving uniform refrigerant distribution through the refrigerant tubes.

## Description

### TECHNICAL FIELD

The invention relates to a heat exchanger having a plurality of refrigerant tubes extending from an inlet header to an outlet header for use with a two phase refrigerant; more particularly, to a heat exchanger having an inlet distributor disposed in the inlet header together with an outlet collector disposed in the outlet header for uniform refrigerant distribution through the core of the heat exchanger.

### BACKGROUND OF INVENTION

Residential and commercial air conditioning and heat pump systems are known to employ modified automotive heat exchangers because of the automotive heat exchangers' high heat transfer efficiency, durability, and relatively ease of manufacturability.

Automotive heat exchangers typically include an inlet header, an outlet header, and a plurality of extruded multi-port refrigerant tubes for proving hydraulic communication between the inlet and outlet headers. The cores of the heat exchangers are defined by the plurality of refrigerant tubes and the corrugated fins disposed between the refrigerant tubes for improved heat transfer efficiency and increased structural rigidity.

For heat pump applications, in cooling mode the indoor heat exchanger acts as the evaporator. In heating mode the outdoor heat exchanger acts as the evaporator. During operation in evaporative mode, a partially expanded two-phase refrigerant enters the lower portions of the refrigerant tubes from the inlet header and expands absorbing heat from the air as it rises within the tubes and changing into a vapor phase. Momentum and gravity effects due to the large mass differences between the liquid and gas phases can result in separation of the phases within the inlet header and cause poor refrigerant distribution throughout the refrigerant tubes. Poor refrigerant distribution degrades evaporator performance and can result in uneven temperature distribution over the core.

The increased in scale of the automotive heat exchanger for residential and commercial applications dramatically increases the lengths of the inlet and outlet headers, which may result in increased refrigerant mal-distribution through the core of the heat exchanger. Known modified automotive heat exchangers utilize either a distributor or collector, but not both in combination. Various factors make up the geometry definition of the inlet distributor and outlet collector. These factors include, but not limited to, cross-sectional area, orifice size, orifice shape, orifice spacing, orifice angular direction, etc. It is necessary to adjust these various factors to obtain desirable uniform refrigerant distribution for each given set of operating parameters. In other words, each different set of operating of parameters would require a great deal of design and evaluation to arrive at a desired geometry of a distributor tube or collector tube that would provide the desired uniform refrigerant distribution through the heat exchanger core.

Accordingly, there remains a long felt need for a heat exchanger that provides for improved uniform refrigerant distribution through the heat exchanger core. There is also a long felt need for a heat exchanger that may be used across wider ranges of operating parameters without having to make adjustments to the above mentioned geometry factors.

### SUMMARY OF THE INVENTION

A heat exchanger assembly having an inlet header in hydraulic communication with an outlet header via a plurality of multi-channel flat refrigerant tubes, in which the multi-channel flat refrigerant tubes are substantially perpendicular to the headers. Interconnecting the refrigerant tubes are corrugated fins. The plurality of refrigerant tubes together with the fins defines the core of the heat exchanger assembly. The heat exchanger assembly also includes a distributor tube disposed in the inlet header cavity and a collector tube disposed in the outlet header cavity, both of which have cooperating features to provide even refrigerant and temperature distribution through the core.

The collector tube includes an inwardly curved surface defining a plurality of orifices. The inwardly curved surface is oriented towards said plurality of straight multi-channel flat refrigerant tubes. The outlet header includes an interior surface defining a first shape; and the collector tube includes an exterior surface opposite that of said inwardly curved surface. The exterior surface of collector tube is complementary to that of said interior surface of said outlet header. Such that the exterior surface of collector tube abuts the interior surface of outlet header thereby forming a refrigerant vapor tight fit. The plurality of orifices of collector tube is substantially evenly spaced along said collector tube. The heater exchanger assembly includes an upstream air side; and the distributor tube defines a plurality of orifices. The distributor tube includes a plurality of orifices, in which the orifices are oriented between 45° to 135° degrees toward the upstream air side and/or between 225° to 315° degrees toward the downstream air side with respect to 0° being aligned in a direction opposite that of gravity. The distributor tube may have an outside diameter of 6.35 mm (1/4") to 9.53 mm (3/8") and each orifice may have a diameter of 0.7 mm to 1.5 mm, arranged substantially linearly along the distributor tube and are spaced 20mm to 90 mm apart.

For an outlet header having a length up to 1448 mm (57"), the collector tube includes a plurality of orifices, each having a diameter of 3.17 mm (1/8") to 6.35 mm (1/4"), arranged substantially linearly along the collector tube and are spaced approximately 27 mm apart. For an outlet header having a length between 1448 mm (57") and 2438 mm (96"), the collector tube includes a plurality of orifices, each having a diameter of approximately 3.17 mm (1/8"), arranged substantially linearly along the collector tube and are spaced approximately 60 mm apart.

The modified automotive style heat exchanger assembly having both a distributor tube and a collector tube together with the cooperating features of the distributor and collector tubes has the advantage of being less sensitive to criteria for archiving uniform refrigerant distribution. A distributor tube and a collector tube designed for one particular application may be used for other applications having different operating parameters without having to redesign or optimize the distributor tube or collector tube.

### BRIEF DESCRIPTION OF DRAWINGS

This invention will be further described with reference to the accompanying drawings in which:

Fig. 1 shows a cross-sectional view of a prior art heat exchanger assembly having an inlet distributor.

Fig. 2 shows a cross-sectional view of an embodiment of the improved heat exchanger assembly having both an inlet distributor and an outlet collector.

Fig. 3 shows a cross-sectional perspective view of the heat exchanger assembly shown in Fig. 2 along line 3-3.

Fig. 4 shows a cross-sectional perspective view of the heat exchanger assembly shown in Fig. 2 along line 4-4.

Fig. 5a shows a thermal image of the core of the prior art heat exchanger assembly shown in Fig. 1 operating in evaporative mode, in which the outlet connector is on the same side of the heat exchanger assembly as the inlet connector.

Fig. 5b shows a thermal image of the core of the prior art heat exchanger assembly shown in Fig. 1 operating in evaporative mode, in which the outlet connector is on the opposite side of the heat exchanger assembly as the inlet connector.

Fig. 5c shows a thermal image of the core of the prior art heat exchanger assembly shown in Fig. 1 operating in evaporative mode, in which the outlet header includes an outlet connector on either end.

Fig. 6 shows a thermal image of the core of the improved heat exchanger assembly of Fig. 2 operating in evaporative mode.

### DESCRIPTION OF THE PREFERRED EMBODIMENT

The present invention will be further described with reference to the accompanying drawings, wherein like numerals indicate corresponding parts throughout the views.

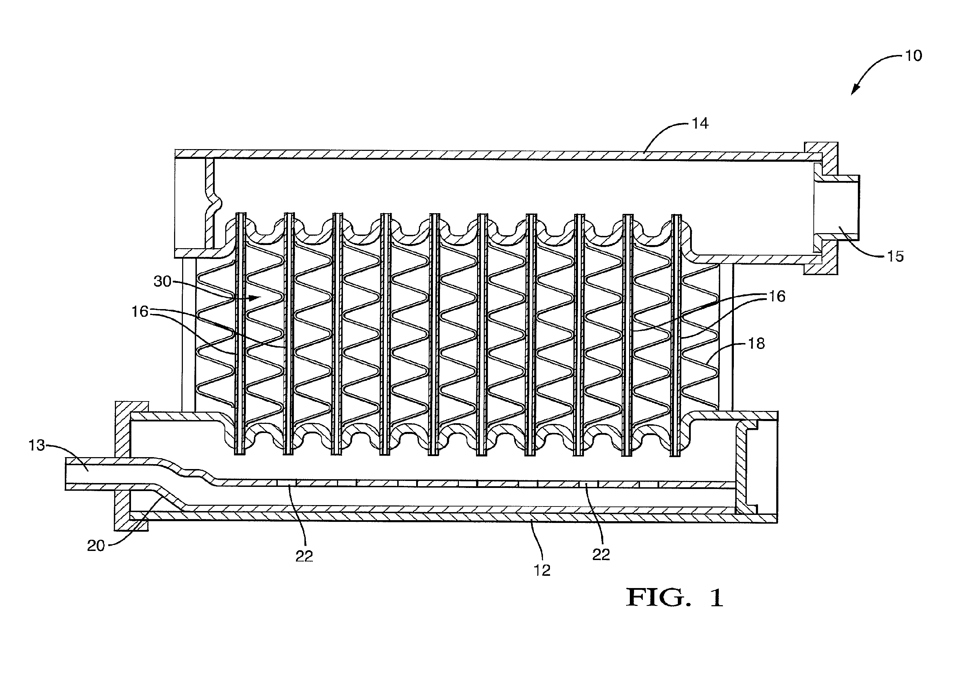

Shown in Fig. 1 is a prior art modified automotive style heat exchanger assembly 10 modified for stationary use in a residential or commercial setting. The heat exchanger assembly 10 includes an inlet header 12 in hydraulic communication with an outlet header 14 via a plurality of extruded multi-port refrigerant tubes 16. Interconnecting the refrigerant tubes 16 are corrugated fins 18 for enhanced heat transfer and increased structural integrity of the heat exchanger assembly 10. The plurality of refrigerant tubes 16 together with the fins 18 defines the core 30 of the heat exchanger assembly 10. Disposed within the inlet header 12 is a distributor tube 20 to assist in the even distribution of refrigerant within the inlet header 12 with the objective of evenly distributing the refrigerant through the plurality of refrigerant tubes 16 for increase heat transfer efficiency. The distributor tube 20 extends substantially parallel with the length of the inlet header 12 and includes a distributor inlet 13 and a plurality of substantially evenly spaced distributor orifices 22 oriented in the direction of the refrigerant tubes 16. An outlet flow connector 15 is provided on one end of the outlet header 14 for the return of vaporized refrigerant to the air conditioning system.

In evaporative mode, a partially expanded two-phase refrigerant enters the distributor inlet 13, flows through the distributor tube 20, and is uniformly distributed throughout the inlet header 12 by way of the substantially evenly spaced distributor orifices 22. As the refrigerant flows through the plurality of refrigerant tubes 16 from the inlet header 12 to the outlet header 14, the refrigerant undergoes a liquid-to-vapor transition as it absorbs heat from the ambient air.

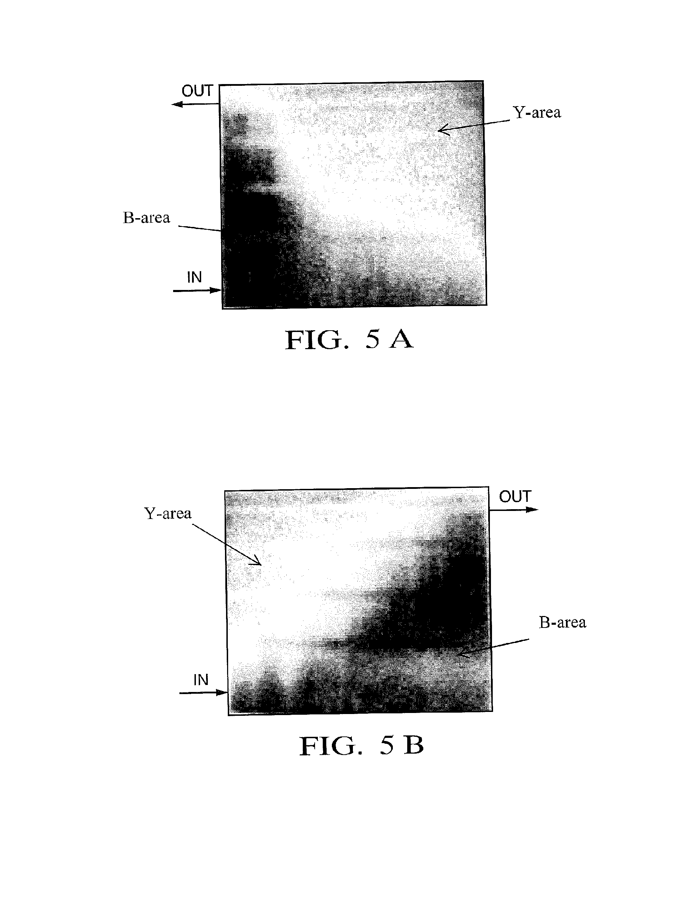

Figs. 5a-c are thermal images of the prior art modified automotive style heat exchanger assembly shown in Fig. 1 having an outlet header 14 greater than 914 mm (36") in length. The heat exchanger assembly 10 was operated in evaporative mode with the outlet connector 15 located in alternative locations on the outlet header 14, while the inlet connector 13 was fixed in the same location. It was surprisingly discovered that the distribution of the two-phase refrigerant through the plurality of tubes is highly influenced by the pressure drop within the outlet header 14, by the location of the outlet flow connector 15, as well as the overall size of the heat exchanger assembly 10. The significance of which are clearly shown in the thermal images.

The left side of each thermal image corresponds to the left side of the heat exchanger assembly 10 and accordingly, the right side of each thermal image corresponds to the right side of heat exchanger assembly 10. The thermal images show the temperature gradient across the core 30 of the heat exchanger assembly 10. The B-area, shown in dark grey, represents the regions of the core 30 having a two-phase refrigerant present in the refrigerant tubes, while the Y-area, shown in light grey, represents the region of the core 30 having a single phase superheated refrigerant vapor present in the refrigerant tubes. It can be viewed that, the B-area represents the flow paths of the two-phase refrigerant from the bottom inlet header 12 to the top outlet header 14 and the Y-area represents the flow paths of little to no refrigerant flow.

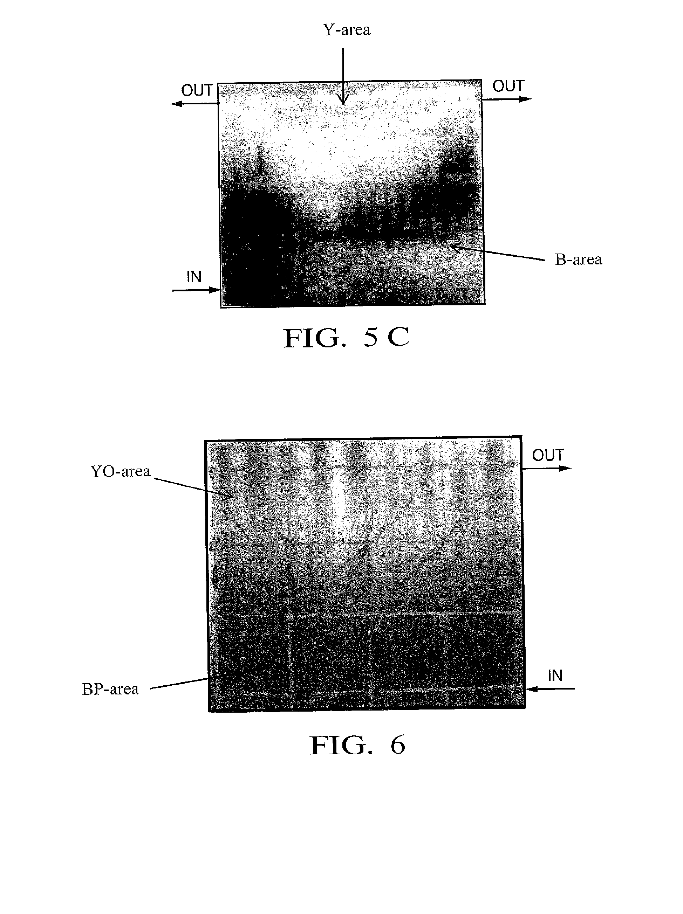

The refrigerant inlet flow connector 13 was held fixed at the lower left for each of Figs. 5a-c. Shown in Fig. 5a is a thermal image of the heat exchanger assembly 10 having an outlet flow connector 15 positioned on the left side of the outlet header 14, corresponding to the upper left of the thermal image. Shown in Fig. 5b is a thermal image of a heat exchanger assembly 10 having the outlet flow connector 15 on the right side of the outlet header 14, corresponding to the upper right of the thermal image. Shown in Fig. 5c is a thermal image of a heat exchanger assembly 10 having the outlet flow connectors 15 on both the left and right side of the outlet header 14, corresponding to the upper left and upper right of the thermal image.

With reference to Figs. 5a and 5b, for a heat exchanger assembly 10 having an outlet header 14 greater than 914 mm (36"), it is shown that the two phase refrigerant (represented by the B-area) tends to migrate to the refrigerant tubes 16 nearest to the outlet flow connector 15 and starve the refrigerant tubes 16 at the opposite side of the core 30 (represented by the Y-area). In Fig. 5a, where the outlet flow connector 15 is located on the upper left, the two phase refrigerant is shown concentrated near the left portion of the core 30 while the right portion of the core 30 is starved of refrigerant. In Fig. 5b, where the outlet flow connector 15 is located on the upper right, the two phase refrigerant is shown concentrated near the right portion of the core 30 while the left portion of the core 30 is starved of refrigerant. Fig. 5c shows that if two outlet flow connectors 15 are used, one on either side of the outlet header 14, the two phase refrigerant is shown concentrated near the right and left portions of the core 30 while the center portion of the core is starved of refrigerant. In other words, for larger heat exchanger assemblies, the two phase refrigerant flow would follow the path nearest the outlet connectors 15 regardless of the location of the distributor inlet 13.

It was also surprisingly found that in smaller heat exchanger assemblies with an outlet header less than 914 mm (36"), substantially the opposite effect for refrigerant distribution occurs due to the momentum of the refrigerant exiting the distribution tube 20. For heat exchangers having shorter headers and a plurality of flat refrigerant tubes, the two phase refrigerant flow would follow the path farthest from the inlet 13 of the distributor tube 20.

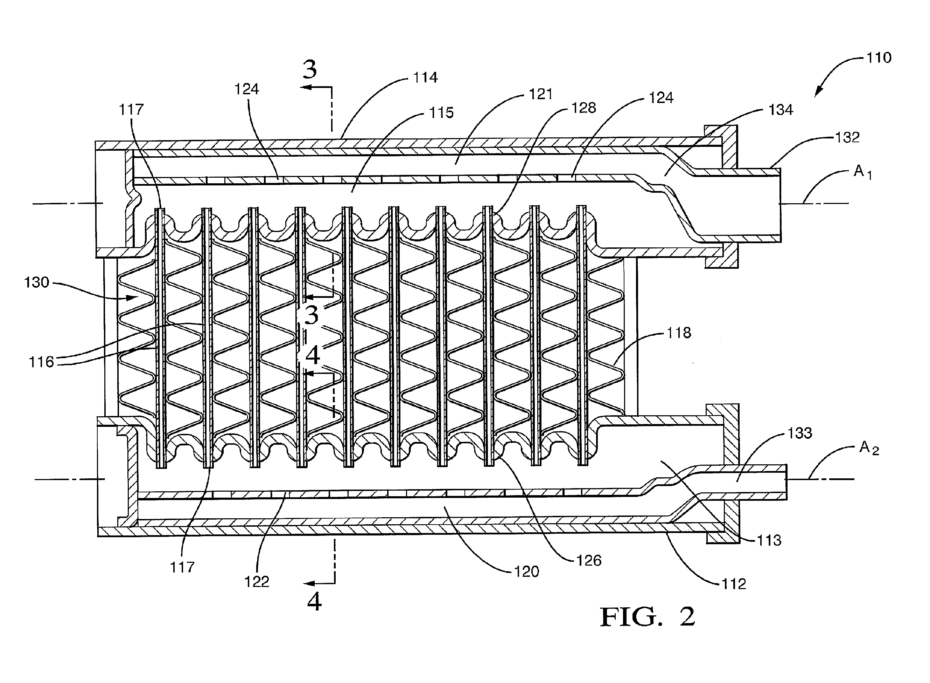

Shown in Fig. 2 is a cross-section of an embodiment of the improved heat exchanger assembly 110 having both a distributor tube 120 and a collector tube 121, wherein the distributor and collector tubes 120, 121 have cooperating features that provide even distribution of refrigerant through the multi-channel flat refrigerant tubes 116.

The heat exchanger assembly 110 includes an outlet header 114 defining an outlet header cavity 115 extending along a first axis A₁ and an inlet header 112 defining an inlet header cavity 113 extending along a second axis A₂. Each of the headers 112, 114 includes a side defining a plurality of header slots 126, 128. Each header slot 126 of the inlet header 112 corresponds to a header slot 128 on the outlet header 114. Inserted into corresponding header slots 126, 128 are multi-channel flat refrigerant tubes 116 extending substantially perpendicular to the first and second axes A₁, A₂. Each of the multi-channel flat refrigerant tubes 116 defines fluid passages 117 hydraulically connecting the inlet header 112 with the outlet header 114. A plurality of corrugated heat transfer fins 118 is disposed between and interconnects adjacent multi-channel flat refrigerant tubes 116 for increased heat transfer efficiency. The heat transfer fins 118 may be serpentine fins or any other heat transfer fins commonly known in the art. The core 130 of the heat exchanger assembly 110 is defined by the plurality of multi-channel flat refrigerant tubes 116 and the fins 118 there between. While the heat exchanger assembly 110 shown in Fig. 2 has a flat or "slab" type core 130, those of ordinary skill in the art would recognize that the heat exchanger assembly 110 may be modified to have a bent or round core.

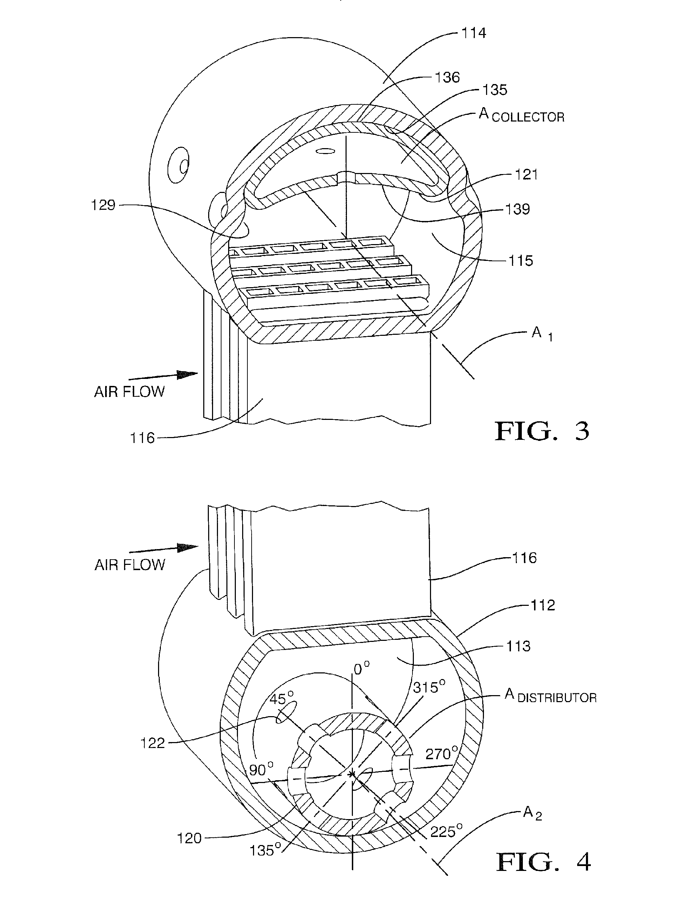

Shown in Fig. 3, is a cross-sectional perspective of the heat exchanger assembly 110 shown in Fig. 2 along line 3-3. Disposed within the outlet header cavity 115 and substantially parallel to the first axis A₁ is the collector tube 121, which provides for the collection and transportation of the vapor phase of the refrigerant out of the outlet header 114. The refrigerant collector tube 121 may be supported by protrusions 129 spaced along the interior surface of the outlet header. The collector tube 121 cross-sectional area A_{collector} may be substantially circular, semi-circular, heart shaped, or non-circular D as shown in Fig. 3. The collector tube 121 extends through one end of the outlet header 114 transitioning into an outlet connector 132 as shown in Fig. 2.

Referring to Figs. 2 and 3, the collector tube 121 includes a plurality of orifices 124 in fluid communication within the outlet header cavity 115 for collecting the refrigerant vapor. The orifices 124 are oriented toward the direction of the refrigerant tubes 116 and are substantially equally spaced along the length of the collector tube 121. The outlet connectors 132 has a tapered transition section 134 which changes the cross-sectional area from a non-circular D having a inwardly curved surface 139 as shown in Fig. 3 to a full round circular shape conforming to the internal diameter of the outlet header 114. The inwardly curved surface 139 aids in the gathering and directing of the vapor refrigerant toward the orifices 124 of the outlet collector 121. The outlet header 114 may include an interior surface 135 defining a first shape and the collector tube 114 may include an exterior surface 136 opposite that of the inwardly curved surface 139, wherein the exterior surface 136 of collector tube 114 is complementary to that of the interior surface 135 of the outlet header 114, such that the exterior surface 136 of collector tube 114 abuts the interior surface 135 of outlet header 114 thereby forming a refrigerant vapor tight fit. These features improve performance and air out temperature differential by minimizing the outlet collector and header refrigerant pressure drop.

The inlet header 112 includes a distributor tube 120 for distributing the refrigerant evenly through inlet header 112 and to the refrigerant tubes 116. Shown in Figure 4 is a cross-sectional perspective of the heat exchanger assembly shown in Fig. 2 along line 4-4. The distribution tube 120 extends substantially parallel to the outlet header second axis A₂ within the inlet header cavity 113. The distributor tube 120 may include a cross-sectional area A_{distributor} that is substantially circular. The distributor tube 120 extends through one end of inlet header 112 and transitions into an inlet connector 133. A plurality of orifices 122 are substantially equally spaced along the length of the distributor tube 120. Orifices 122 having a circular shaped profile may be spaced uniformly along the distributor tube 120 to provide desired refrigerant distribution when used together with the outlet collector 121.

Fig. 6 shows a thermal image of the improved heat exchanger assembly 110 and the desirable effects of the interactions of the inlet distributor tube 120 and the outlet collector tube 121 operating in concert. The change in color represents a change in core temperature. The BP-area, shown in dark grey, represents the region of two-phase refrigerant flow, while the YO-area, shown in lighter grey, represents the region of single phase superheated vapor through the refrigerant tubes 116. The thermal image shows that the temperature gradient is substantially uniform through the core 130 with no localized hot or cold spots, thereby indicating that the two-phase refrigerant is uniformly distributed through the plurality of refrigerant tubes 116.

A typical modified heat exchanger assembly has inlet and outlet header lengths that are 3 to 8 times longer than the header lengths for automotive applications. It was found that a good distributor or collector design strongly depends on refrigerant mass flow rate and the header length. Inlet distributor tubes have been evaluated with a 0.7 mm - 1.5 mm orifice size with a 20 mm - 90 mm orifice spacing for a 6.35 mm (1/4"), 7.94 mm (5/16") and 9.53 mm (3/8") distributor tube outside diameter. The distributor tube geometry found to provide the most robust design for various refrigerant flow rates and header lengths is a 1.3 mm orifice diameter with a fixed spacing of 60 mm for a 9.53 mm (3/8") outside diameter distributor tube.

The orifices may be oriented between 45° to 135° degrees with respect to 0° being aligned in a direction opposite that of gravity. Shown in Fig. 4, the orifices are oriented between 45° to 135° degrees from the plurality of vertical multi-channel flat refrigerant tubes toward the upstream air side of heat exchanger assembly. In concurrence or in the alternative, the orifices may be oriented between 225° to 315° degrees from the plurality of vertical multi-channel flat refrigerant tubes toward the downstream air side of heat exchanger assembly. Preferably, the orifices are oriented 90° and/or 270° degrees with respect to 0° being aligned in a direction opposite that of gravity.

Outlet collectors have been evaluated with 3.17 mm (1/8"), 4.76 mm (3/16"), 6.35 mm (1/4"), and 7.94 mm (5/16") orifices at several fixed and variable spacing and distributions. The geometry selected to provide the most robust design for various refrigerant flow rates depended slightly on header lengths. Combination of 3.17 mm (1/8") orifices and 6.35 mm (1/4") orifices spaced every 27 mm was acceptable for header length up to 1448 mm (57"), and 3.17 mm (1/8") orifices spaced every 60 mm for outlet header lengths from 1448 mm (57") to 2438 mm(96").

An added benefit of a heat exchanger assembly 110 is that the design features can be used for a wider range of header lengths and refrigerant flow rates without having to recalculating the optimal orifice sizes and locations for the distributor or collectors tubes. For example, it was found that the same orifice size and spacing for a given inlet distributor tube diameter can be used over a complete application lineup of 1.5 ton ― 10.0 ton indoor heat exchangers and outdoor heat pumps heat exchangers, with a range of header lengths from 457 mm (18") to 2438 mm (96") and their corresponding core tube internal refrigerant velocities.

An advantage of this invention provides even refrigerant distribution through the inlet header, across the refrigerant tubes, and outlet header resulting in improved heat transfer performance and even outlet air temperature distribution. Another advantage is that the heat exchanger assembly is less sensitive to application and heat exchanger size, thereby significantly reducing the design effort for adapting the heat exchanger application to other operating parameters.

While this invention has been described in terms of the preferred embodiment thereof, it is not intended to be so limited, but rather only to the extent set forth in the claims that follow.

## Claims

**1.** A heat exchanger assembly (110) comprising:
an inlet header (112) defining an inlet header cavity (113) extending along a first axis (A₁);
an outlet header (114) defining an outlet header cavity (115) extending along a second axis (A₂) spaced apart from and substantially parallel to said first axis (A₁);
said inlet header (112) includes a plurality of header slots (126) and said outlet header (114) includes a plurality header slots (128) corresponding to header slots (126) of inlet header (112);
a plurality of multi-channel flat refrigerant tubes (116) defining fluid passages and extending through said header slots (126, 128), thereby providing hydraulic communication between said headers (112, 114) for refrigerant flow, wherein said plurality of multi-channel flat refrigerant tubes (116) are substantially perpendicular to said first axis (A₁) and second axis (A₂);
a distributor tube (120) disposed in said inlet header cavity (113); and
a collector tube (121) disposed in said outlet header cavity(115).

**2.** The heat exchanger assembly (110) of claim 1, wherein:
said collector tube (121) includes an inwardly curved surface (139) defining a plurality of orifices (122), wherein said inwardly curved surface (139) is oriented towards said plurality of straight multi-channel flat refrigerant tubes (116).

**3.** The heat exchanger assembly (110) of claim 2, wherein:
said outlet header (114) includes an interior surface (135) defining a first shape; and
said collector tube (121) includes an exterior surface (136) opposite that of said inwardly curved surface (139), wherein said exterior surface (136) of collector tube (121) is complementary to that of said interior surface (135) of said outlet header (114), such that said exterior surface (136) of collector tube (121) abuts said interior surface (135) of outlet header (114) thereby forming a refrigerant vapor tight fit.

**4.** The heat exchanger assembly (110) of claim 3, wherein:
said plurality of orifices (124) of collector tube (121) is substantially evenly spaced along said collector tube (121).

**5.** The heater exchanger assembly (110) of claim 4, wherein:
said heater exchanger assembly (110) includes an upstream air side; and
said distributor tube (120) defines a plurality of orifices (122), wherein said orifices (122) are oriented between 45° to 135° degrees toward said upstream air side of heat exchanger assembly (110) with respect to 0° being aligned in a direction opposite that of gravity.

**6.** The heat exchanger of assembly (110) of claim 5, wherein:
wherein said orifices (122) of said distributor tube (120) are oriented 90° degrees toward said upstream air side of heat exchanger assembly (110) with respect to 0° being aligned in a direction opposite that of gravity.

**7.** The heater exchanger assembly (110) of claim 4, wherein:
said heater exchanger assembly (110) includes a downstream air side;
and
said distributor tube (120) defines a plurality of orifices (122), wherein said orifices (122) are oriented between 225° to 315° degrees toward said downstream air side of heat exchanger assembly (110) with respect to 0° being aligned in a direction opposite that of gravity.

**8.** The heat exchanger assembly (110) of claim 7, wherein:
said orifices (122) of said distributor tube (120) are 270° degrees toward said downstream air side of heat exchanger assembly (110) with respect to 0° being aligned in a direction opposite that of gravity.

**8.** The heat exchanger assembly (110) of claim 2, wherein said distributor tube (120) have an outside diameter of 6.35 mm (1/4") to 9.53 mm (3/8") and defines a plurality of orifices (122) having a diameter of 0.7 mm to 1.5 mm arranged substantially linearly along said distributor tube (120).

**10.** The heat exchanger assembly (110) of claim 9, wherein said plurality of orifices (122) are spaced 20 mm to 90 mm apart.

**11.** The heat exchanger assembly (110) of claim 10,
wherein said outlet header (114) have a length up to 1448 mm (57"); and
wherein said collector tube (121) defines a plurality of orifices (124) having a diameter of 3.17 mm (1/8") to 6.35 mm(1/4") arranged substantially linearly along said collector tube (121) on said inwardly curved surface (139).

**12.** The heat exchanger assembly (110) of claim 11, wherein said plurality of orifices (124) are spaced approximately 27 mm apart.

**13.** The heat exchanger assembly (110) of claim 10,
wherein said outlet header (114) have a length between 1448 mm (57") and 2438 mm (96"); and
wherein said collector tube (121) defines a plurality of orifices (124) having a diameter of 3.17 mm (1/8") arranged substantially linearly along said collector tube (121).

**14.** The heat exchanger assembly (110) of claim 13, wherein said plurality of orifices (124) are spaced 60 mm apart.
